# EUROPÄISCHE PATENTSCHRIFT

(11) **EP 1 191 775 B1**
(45) Veröffentlichungstag und Bekanntmachung des Hinweises auf die Patenterteilung: **10.10.2007**
(21) Anmeldenummer: 01250296.9
(22) Anmeldetag: 16.08.2001
(51) Int. Cl.: H04M 15/00, H04M 15/28, H04Q 3/00

(54) **Verfahren zur Leistungsvergebührung in einem Kommunikationsnetz und entsprechende Applikations-Software**
Method for billing services in a communication network and corresponding application software
Méthode pour la facturation des services dans un réseau de communication et logiciel correspondant

(30) Priorität: 26.09.2000 DE 10047595; 23.03.2001 DE 10115744
(43) Veröffentlichungstag der Anmeldung: 27.03.2002
(73) Patentinhaber: NOKIA SIEMENS NETWORKS GMBH & CO. KG, 81541 München (DE)
(72) Erfinder: Baese, Gero, 81371 München (DE); Fischer, Andre, 10965 Berlin (DE); Gebler, Martin, 82049 Pulach im Isartal (DE); Moritz, Peter, 85540 Haar (DE); Markgraf, Sabine, 82131 Gauting (DE); Prange, Stefan Dr., 81476 München (DE); Schlossnikel, Annette, 81245 München (DE); Sibila, Arnd, 82272 Moorenweis (DE); Strobel, Thomas, 82131 Gauting (DE); Von Brockdorff, Christian, 82131 Gauting (DE); Wilde, Juergen, 82024 Taufkirchen (DE)

(56) Entgegenhaltungen:
- EP-A- 0 966 129
- US-A- 5 577 100

## Beschreibung

Die vorliegende Erfindung betrifft ein Verfahren zur Vergebührung einer in einem Kommunikationsnetz erbrachten Leistung, eine entsprechende zum Erbringen der Leistung und zu ihrer Vergebührung verwendbare Applikations-Soft- und/oder Hardware sowie ein Kommunikationsnetzsystem mit einer entsprechenden zum Erbringen der Leistung und zu ihrer Vergebührung verwendbaren Applikations-Soft- und/oder Hardware.

Im Allgemeinen werden Leistungen, die in und von einem Kommunikationsnetz bereitgestellt werden, bei Inanspruchnahme von einem Teilnehmer des Kommunikationsnetzes durch eine zentrale Einheit eines Intelligenten Netzes (IN) erbracht und gesteuert. Gegebenenfalls muss dabei der Teilnehmer des Kommunikationsnetzes, der eine oder mehrere bestimmte Leistungen bzw. Dienste in Anspruch nehmen möchte, in einer zentralen Einheit des Intelligenten Netzes registriert bzw. subskripiert sein. Ein Intelligentes Netz enthält typischerweise einen intelligenten Knoten, welcher die Abläufe in dem Kommunikationsnetz zentral überwacht und steuert. Die zur Vergebührung einer von dem Intelligenten Netz erbrachten Leistung bzw. eines von ihm erbrachten Dienstes notwendigen Informationen werden ebenfalls durch das Intelligente Netz in einer dem Intelligenten Netz zugeordneten zentralen Speichereinheit erfasst und zur entsprechenden Weiterverarbeitung an eine zur Vergebührung im Kommunikationsnetz vorgesehene Abrechnungseinheit weitergeleitet.

Die in einem Kommunikationsnetz mittels eines Intelligenten Netzes bereitstellbaren Dienste bzw. erbringbaren Leistungen sind für alle berechtigten, d.h. gegebenenfalls entsprechend registrierten Teilnehmern des Kommunikationsnetzes gleich und in gleicher Weise erbringbar.

Vor diesem Hintergrund war es nun eine Aufgabe der vorliegenden Erfindung ein Verfahren bereitzustellen, mit dessen Hilfe es möglich ist, teilnehmerspezifische Leistungen zu erbringen und diese vor Ort, d.h. unmittelbar am Ort der erbrachten Leistungen zu vergebühren.

Aus der Patentschrift US 5,577,100 ist ein Mobiltelefon bekannt, welches interne Abrechnungsfähigkeiten aufweist. Mittels eines internen Abrechnungsprogramms wird in Echtzeit ein Konto belastet, wenn mit dem Mobiltelefon Telefongespräche geführt werden. Dabei ist auf einer Magnetkarte die Höhe eines vorausbezahlten Betrags codiert; dieser vorausbezahlte Betrag kann mittels des Mobiltelefon verbraucht werden.

Aus der europäischen Patentanmeldung EP 0 966 129 A2 ist ein Verfahren zum Bestimmen von Abrechnungsinformationen in einem mobilen Telekommunikationssystem bekannt, wobei das Telekommunikationssystem eine oder mehrere Mobilstationen umfasst. Bei diesem Verfahren werden Informationen über eine übertragene Datenmenge (Payload-Daten) gesammelt. Zusätzlich können Informationen über die Dauer von Anrufen bestimmt werden. Bei dem Verfahren wird eine Rechnung erstellt, deren Höhe proportional ist zu der Menge der übertragenen Payload-Daten.

Gelöst wird die oben genannte Aufgabe durch ein Verfahren gemäß Anspruch 1. Vorteilhafte Ausführungsformen des erfindungsgemäßen Verfahrens sind in den entsprechenden Unteransprüchen aufgeführt.

Gemäß Anspruch 1 wird bereitgestellt ein Verfahren zur Vergebührung einer in einem Kommunikationsnetz erbrachten Leistung in Form einer Bereitstellung von Informationen aus einer Gesamtheit von Informationen, bei dem die Leistung und die Vergebührung dieser Leistung mittels einer geeigneten Applikations-Software auf einer Kommunikationseinheit eines Teilnehmers des Kommunikationsnetzes erbracht bzw. vorgenommen wird, wobei auf eine teilnehmerindividuelle Auswahl von Informationen hin aus der Gesamtheit der Informationen die ausgewählten Informationen ausgefiltert werden, und die ausgefilterten Informationen auf die Kommunikationseinheit des Teilnehmers geladen werden und wobei die Höhe der zu entrichtenden Gebühr abhängig ist vom Detailgrad der aus der Gesamtheit von Informationen ausgefilterten Informationen.

In einer bevorzugten Ausführungsform des erfindungsgemäßen Verfahrens wird die Leistung teilnehmerspezifisch erbracht. Das bedeutet, dass jeder Teilnehmer, der berechtigt ist, eine derartige Leistung in Anspruch zu nehmen, d.h. jeder Teilnehmer, der über eine entsprechende Applikations-Soft- und/oder Hardware verfügt, die von der Applikations-Soft- und/oder Hardware zu erbringende Leistung auf seine individuellen Bedürfnisse abstimmen kann.

In einer bevorzugten Ausführungsform des erfindungsgemäßen Verfahrens besteht die von der Applikations-Soft- und/oder Hardware zu erbringende Leistung in einer Bereitstellung individualisierter Information aus einer Gesamtheit von Informationen. Bei der Gesamtheit von Informationen kann es sich dabei beispielsweise um eine Sammlung von Presseinformationen von verschiedenen Verlagen, Agenturen oder anderen Informationsquellen handeln. Bislang war eine Personalisierung bzw. eine Individualisierung von Informationen nur nach sehr groben Einteilungen möglich. Diese grobe Einteilung fand dabei im Allgemeinen in einer zentralen Stelle statt, von der aus dann ein nur kleiner individueller Datenstrom zu dem entsprechenden Teilnehmer übertragen wurde. Auch beim Fernsehen beispielsweise geht die Personalisierung von Informationen durch einen Teilnehmer nur grob vonstatten, nämlich durch eigenständiges Umschalten bzw. Auswählen zwischen ansonsten teilnehmerseitig unveränderbaren Programmen. Die Programme hingegen sind nicht auf die spezifischen Wünsche eines Teilnehmers abgestimmt. Insofern kann man auch hier nicht von einer Personalisierung im Sinne der Erfindung sprechen. Eine Personalisierung im Sinne der Erfindung bedeutet, dass einem Teilnehmer nur die von ihm gewünschten und auf ihn persönlich zugeschnittenen Inhalte bzw. Informationen übermittelt bzw. für ihn bereitgestellt werden. Über die erfindungsgemäß vorgesehene Applikations-Soft- und/oder Hardware wird dem mindestens einen Teilnehmer des Netzes ermöglicht, individuell Informationen aus der Gesamtheit von Informationen auszuwählen und abzuspeichern, vorzugsweise auch auf einem geeigneten Drucker auszudrucken. Die Auswahl von Informationen aus der Gesamtheit von Informationen kann dabei von dem Teilnehmer jederzeit über die erfindungsgemäß vorgesehene Applikations-Soft- und/oder Hardware, auch recht dynamisch, geändert werden. Die Gesamtheit von Informationen kann als komplette "Rohinformation" gespeichert und anschließend bearbeitet werden, was allerdings einen großen Speicherplatz erfordert, oder sie kann "on the fly", d.h. noch während des Vorgangs des Übertragens, gefiltert werden, so dass nur die personalisierte Information, vorzugsweise mit benachbarten Informationen zur möglichen Nachfrage, gespeichert und entsprechend vorbereitet wird, d.h. ausgedruckt oder auf eine geeignete Kommunikationseinheit, vorzugsweise auf ein Kommunikationsendgerät bzw. Anzeigegerät geladen wird.

Eine Individualisierung der Information aus einer Gesamtheit von Informationen kann auf verschiedene Art und Weise erfolgen. Zum einen kann von dem Teilnehmer des Netzes eine inhaltliche Individualisierung vorgenommen werden, d.h. er kann die Auswahl nach Themengebieten treffen, wie beispielsweise Sport, Wirtschaft, Börse, Kultur, Feuilleton, Klatsch oder Anzeigen. Denkbar ist es auch diese Auswahl nach Themengebieten noch weiter zu präzisieren, beispielsweise gezielt nur Informationen zum Neuen Markt Frankfurt, nur Formel 1 spezifische Informationen oder nur Kommunikationstechnik-Wirtschaftsinformationen auszuwählen. Ferner ist es dem Teilnehmer des Netzes erfindungsgemäß möglich, die Darstellungsform der von ihm ausgewählten Informationen zu bestimmen bzw. wie detailliert eine Information übermittelt werden soll. Er kann sich dafür entscheiden, nur Überschriften oder nur Überschriften mit dem 1. Absatz oder vollständige Artikel übermittelt zu bekommen.

Vorzugsweise wird die Vergebührung der mittels der erfindungsgemäß vorgesehenen Applikations-Soft- und/oder Hardware erbrachten Leistung mittels der selben Applikations-Soft- und/oder Hardware vorgenommen. Dabei soll die Vergebührung der Leistung vorzugsweise leistungsbezogen bzw. leistungsgerecht erfolgen. Je nach Aufwand der erbrachten Leistung muss ein entsprechendes Entgelt dem die Leistung in Anspruch nehmenden Teilnehmer des Kommunikationsnetzes in Rechnung gestellt werden. Im Falle, dass es sich bei der erbrachten Leistung beispielsweise um die erläuterte Bereitstellung individualisierter Information aus einer Gesamtheit von Informationen handelt, orientiert sich die Vergebührung beispielsweise an dem Detailgrad, in welchem die Individualisierung seitens des entsprechenden Teilnehmers vorgenommen wurde. Je komplizierter es ist, aus der Gesamtheit von Informationen die gewünschte Information herauszufiltern, desto höher sollte die zu entrichtende Gebühr sein. Das bedeutet, dass auch die Vergebührung neben der erbrachten Leistung teilnehmerspezifisch erfolgt.

Im Gegensatz zur Erbringung einer Leistung, was vorzugsweise von einem Teilnehmer entsprechend selbständig mittels der erfindungsgemäß vorgesehenen Applikations- Soft- und/oder Hardware gesteuert werden kann, ist die Vergebührung eben dieser erbrachten Leistung vorzugsweise nicht durch den Teilnehmer, der die entsprechende Leistung in Anspruch nimmt, manipulierbar. Die Vergebührung für eine Leistung wird vorzugsweise im Vorfeld durch einen Anbieter der entsprechenden Leistung oder durch den Betreiber des Kommunikationsnetzes festgesetzt und erfolgt automatisch. Dabei wäre es beispielsweise denkbar, zunächst einen Grundbetrag bzw. eine Grundgebühr für die unterste Stufe der Individualisierung der Information zu erheben. Als unterste Stufe könnte beispielsweise die reine Themenauswahl aus der Gesamtheit von Information angesehen werden ohne sonstige weitergehende Spezifizierungen, d.h. beispielsweise die Auswahl von Wirtschaft, Sport oder Politik jeweils im Gesamten. Für eine weitergehende Individualisierung könnte dann beispielsweise jeweils eine entsprechende Aufschlagsgebühr erhoben werden. Eine weitergehende Individualisierung würde beispielsweise darin bestehen, innerhalb eines Themas, wie Wirtschaft oder Sport, nochmals eine spezifische Auswahl zu treffen, beispielsweise nur Börseninfo zum "Neuen Markt" oder Formel 1 Nachrichten. Zudem könnte eine weitere Aufschlagsgebühr erhoben werden, wenn eine spezifische Darstellungsform gewünscht wird, d.h. keine kompletten Artikel, sondern beispielsweise nur Überschriften oder Überschriften mit Leitsatz.

In einer weiteren bevorzugten Ausführungsform des erfindungsgemäßen Verfahrens handelt es sich bei der Kommunikationseinheit des Teilnehmers, auf welcher eine entsprechende Leistung mittels der erfindungsgemäß vorgesehenen Applikations- Soft- und/oder Hardware erbracht wird, um ein Kommunikationsendgerät, vorzugsweise um ein Mobilkommunikationsgerät, wie beispielsweise ein Mobilfunkgerät, ein Laptop oder ein SIMPAD. Es kann sich aber auch um eine Druckereinheit handeln, mittels derer im Falle, dass die Leistung in der Bereitstellung individualisierter Information aus einer Gesamtheit von Informationen besteht, eben diese individualisierte Information ausgedruckt werden kann.

Ferner wird von der vorliegenden Erfindung eine Applikations-Soft- und/oder Hardware bereitgestellt, mittels derer eine Leistung erbringbar und eine Vergebührung eben dieser Leistung vornehmbar ist. Im Falle einer Hardware kann dabei beispielsweise eine sogenannte "digital video broadcast plug-in card" eingesetzt werden.

In einer bevorzugten Ausführungsform der erfindungsgemäßen Applikations- Soft und/oder Hardware ist diese auf einer Kommunikationseinheit eines Teilnehmers des Kommunikationsnetzes installierbar, so dass der Teilnehmer die Applikations-Soft- und/oder Hardware zur Erbringung einer von ihm gewünschten Leistung recht leicht verwenden kann. Bei der Kommunikationseinheit handelt es sich dabei vorzugsweise um ein Kommunikationsendgerät, insbesondere um ein Mobilkommunikationsgerät, wie beispielsweise ein Mobilfunkgerät, ein Laptop oder ein SIMPAD. Dadurch ist der Teilnehmer des Kommunikationsnetzes in der Lage, auch unterwegs Leistungen anzufordern und in Anspruch zu nehmen.

In einer weiteren bevorzugten Ausführungsform der erfindungsgemäßen Applikations- Soft und/oder Hardware ist die durch sie vornehmbare Vergebührung erbrachter Leistung leistungsbezogen bzw. leistungsgerecht. Erfordert die Erbringung einer Leistung verhältnismäßig viel Aufwand, so soll sich dies in einer entsprechend hohen Vergebührung äußern, die dem Teilnehmer des Kommunikationsnetzes, der die Leistung in Anspruch nimmt, auferlegt wird. Handelt es sich beispielsweise um eine bereits beschriebene Bereitstellung von individualisierter Information aus einer Gesamtheit von Information, so ist die Vergebührung abhängig von dem Grad der Individualisierung, d.h. beispielsweise je höher der gewünschte Detailgrad der aus der Gesamtheit von Information zu filternden Information, desto aufwendiger ist die Leistung und folglich soll diese Leistung auch entsprechend hoch vergebührt werden.

Ferner soll vorzugsweise mittels der erfindungsgemäßen Applikations-Soft- und/oder Hardware die gewünschte Leistung spezifisch für einen diese Leistung in Anspruch nehmenden Teilnehmer des Kommunikationsnetzes erbringbar sein. Das bedeutet, dass der Teilnehmer selbst die von ihm gewünschte Leistung genau auf sich und seine Bedürfnisse abstimmen bzw. zuschneiden kann. Im Falle der bereits erwähnten Bereitstellung von individualisierter Information aus einer Gesamtheit von Information kann der Teilnehmer des Kommunikationsnetzes, der zu einer entsprechenden Leistungsinanspruchnahme berechtigt ist und infolgedessen auch über eine erfindungsgemäße Applikations-Soft- und/oder Hardware verfügt, bei entsprechender Anwendung der erfindungsgemäßen Applikations-Soft- und/oder Hardware genau bestimmen, welche Information er haben möchte und auf welche er verzichtet. Ferner kann er die Art und Weise der Darstellung der von ihm angeforderten Information bestimmen und deren Detailgrad.

Letztlich betrifft die vorliegende Erfindung ein Kommunikationsnetz, das eine derartige erfindungsgemäße Applikations-Soft- und/oder Hardware aufweist.

## Patentansprüche

1. Verfahren zur Vergebührung einer in einem Kommunikationsnetz erbrachten Leistung in Form einer Bereitstellung von Informationen aus einer Gesamtheit von Informationen, bei dem die Leistung und die Vergebührung dieser Leistung mittels einer geeigneten Applikations-Software auf einer Kommunikationseinheit eines Teilnehmers des Kommunikationsnetzes erbracht bzw. vorgenommen wird, wobei auf eine teilnehmerindividuelle Auswahl von Informationen hin aus der Gesamtheit der Informationen die ausgewählten Informationen ausgefiltert werden, und die ausgefilterten Informationen auf die Kommunikationseinheit des Teilnehmers geladen werden und wobei die Höhe der zu entrichtenden Gebühr abhängig ist vom Detailgrad der aus der Gesamtheit von Informationen ausgefilterten Informationen.

2. Verfahren nach Anspruch 1,
**dadurch gekennzeichnet, dass**
bei der Vergebührung der Leistung mit größerer Kompliziertheit der Ausfilterung höhere zu entrichtende Gebühren erhoben werden.

3. Verfahren nach Anspruch 1 oder 2,
**dadurch gekennzeichnet, dass**
es sich bei der Kommunikationseinheit des Teilnehmers des Kommunikationsnetzes um ein Kommunikationsendgerät, insbesondere um ein Mobilkommunikationsgerät handelt.

4. Applikations-Software, die in ein Kommunikationsnetz integrierbar ist und mittels welcher mindestens eine Leistung in Form einer Bereitstellung von Informationen aus einer Gesamtheit von Informationen erbringbar und eine vergebührung dieser erbrachten Leistung vornehmbar ist, wobei die Leistung umfasst, auf eine teilnehmerindividuelle Auswahl von Informationen hin aus der Gesamtheit der Informationen die ausgewählten Informationen auszufiltern und die ausgefilterten Informationen auf eine Kommunikationseinheit des Teilnehmers zu laden **und wobei die Höhe der zu entrichtenden Gebühr abhängig ist vom Detailgrad der aus der Gesamtheit von Informationen ausgefilterten Informationen**.

5. Applikations-Software nach Anspruch 4,
**dadurch gekennzeichnet, dass**
die Applikations-Software auf einer Kommunikationseinheit eines Teilnehmers des Kommunikationsnetzes installierbar ist.

6. Applikations-Software nach Anspruch 5,
**dadurch gekennzeichnet, dass**
die Kommunikationseinheit ein Kommunikationsendgerät, insbesondere ein Mobilkommunikationsgerät ist.

7. Applikations-Software nach Anspruch 5 oder 6,
**dadurch gekennzeichnet, dass**
bei der Vergebührung der Leistung mit größerer Kompliziertheit der Ausfilterung höhere zu entrichtende Gebühren erhebbar sind.

8. Kommunikationsnetzsystem, aufweisend eine Applikations-Software nach einem der Ansprüche 4 bis 7.

## Claims

1. Method for billing a service provided in a communication network in the form of a provision of information from a totality of information, in which the service and the billing of this service is provided or undertaken by means of suitable application software on a communication unit of a subscriber of the communication network, with the selected information being filtered out for a subscriber-individual selection of information from the totality of the information and the filtered-out information being billed on the communication unit of the subscriber and with the level of the charge to be made depending on the level of detail of the information filtered out from the totality of information.

2. Method according to claim 1,
**characterised in that**,
higher charges are made for the billing of the service with greater complexity of filtering out.

3. Method according to claim 1 or 2,
**characterised in that**,
the communication unit of the subscriber of the communication network is a communication terminal, especially a mobile communication device.

4. Application-software which can be integrated into a communication network and by means of which at least one service in the form of making available information from a totality of information can be provided and this service provided can be billed, with the service comprising, in response to a subscriber-individual selection of information, filtering out the selected information from the totality of the information and loading the filtered-out information onto a communication unit of the subscriber, and with the level of the charge made being dependent on the degree of detail of the information filtered out of the totality of information.

5. Application software in accordance with claim 4,
**characterised in that**
the application software is installable on a communication unit of a subscriber of the communication network.

6. Application software according to claim 5,
**characterised in that**
the communication unit is a communication terminal, especially a mobile communication device.

7. Application software according to claim 5 or 6,
**characterised in that**
higher charges can be made for billing of the service with greater complexity of filtering out.

8. Communication network system, featuring application software according to one of the claims 4 to 7.

## Revendications

1. Procédé permettant de facturer une prestation, fournie dans un réseau de communication, sous la forme d'une mise à disposition d'informations à partir d'un ensemble d'informations, dans lequel la prestation et la facturation de cette prestation est fournie resp. opérée au moyen d'un logiciel d'application approprié sur une unité de communication d'un usager du réseau de communication, les informations sélectionnées, suite à une sélection d'informations individuelle pour chaque usager, étant filtrées hors de l'ensemble des informations et les informations filtrées étant chargées sur l'unité de communication de l'usager, et le montant des frais à payer dépendant du degré de détail des informations filtrées hors de l'ensemble d'informations.

2. Procédé selon la revendication 1, **caractérisé en ce que**, à la facturation de la prestation avec une complexité plus grande du filtrage, il y a prélèvement de frais à payer d'un montant supérieur.

3. Procédé selon la revendication 1 ou 2, **caractérisé en ce que** l'unité de communication de l'usager du réseau de communication est un terminal de communication, en particulier un appareil de communication mobile.

4. Logiciel d'application intégrable dans un réseau de communication et au moyen duquel au moins une prestation peut être fournie sous la forme d'une mise à disposition d'informations à partir d'un ensemble d'informations et une facturation de cette prestation fournie peut être opérée, la prestation incluant le filtrage, hors de l'ensemble des informations, des informations sélectionnées, suite à une sélection d'informations individuelle pour chaque usager, et le chargement des informations filtrées sur une unité de communication de l'usager, et le montant des frais à payer dépendant du degré de détail des informations filtrées hors de l'ensemble d'informations.

5. Logiciel d'application selon la revendication 4, **caractérisé en ce que** le logiciel d'application peut être installé sur une unité de communication d'un usager du réseau de communication.

6. Logiciel d'application selon la revendication 5, **caractérisé en ce que** l'unité de communication est un terminal de communication, en particulier un appareil de communication mobile.

7. Logiciel d'application selon la revendication 5 ou 6, **caractérisé en ce que**, à la facturation de la prestation avec une complexité plus grande du filtrage, il y a prélèvement de frais à payer d'un montant supérieur.

8. Système de communication comportant un logiciel d'application selon l'une des revendications 4 à 7.
